# EUROPEAN PATENT APPLICATION

(11) **EP 1 114 957 A1**
(43) Date of publication of application: **11.07.2001**
(21) Application number: 01300065.8
(22) Date of filing: 05.01.2001
(51) Int. Cl.: F16K 31/143

(54) **Pilot valve**

(30) Priority: 06.01.2000 JP 2000000877
(71) Applicant: SMC CORPORATION, Minato-ku, Tokyo (JP)
(72) Inventor: Tokuda, Tetsuro, SMC Corp. Tsukuba Tech. Center, Tsukuba-gun, Ibaraki (JP); Sakurai, Toyonobu, SMC Corp. Tsukuba Tech. Center, Tsukuba-gun, Ibaraki (JP); Suzuki, Hiroaki, SMC Corp. Tsukuba Tech. Center, Tsukuba-gun, Ibaraki (JP)
(74) Representative: Findlay, Alice Rosemary

(57) **Abstract**

A valve is provided in which a shaft (15) and a piston (18) are coupled to each other at an intermediate position of the shaft by a male screw (15e) formed on an outer periphery of a central portion of the shaft (15) and a female screw (18d) formed on an inner periphery of a central hole of the piston (18). A seal (63) is provided between the shaft (15) and the piston (18), a stopper ring (64) is attached to the outer periphery of the shaft (15) so as to prevent the piston from loosening, and a tip end portion and a proximal end portion of the shaft (15) on either side of the piston (18) are slidably supported by respective bearings (24,50).

## Description

The present invention relates to a pilot type two-port valve for allowing and preventing passage of a fluid such as air, oil, water and steam.

There is already known a pilot type two-port valve for vertically moving a pressure receiving element such as a piston or a diaphragm and a valve member coupled to the pressure receiving element and opening and closing a valve seat by supplying and discharging a pressure fluid to and from a pressure action chamber on one side of the pressure receiving element by switching a pilot valve, and for allowing and preventing flow of pressure fluid from an input port to an output port by opening and closing the valve seat.

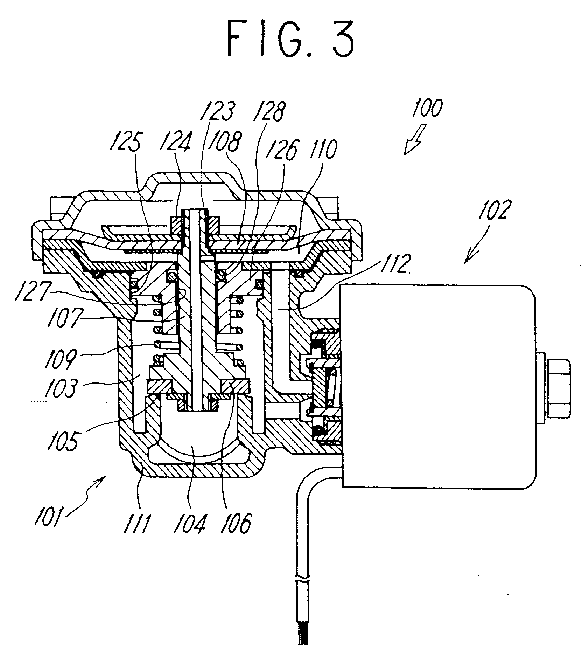

An example of this known pilot type two-port valve 100 is shown in FIG. 3. The valve 100 comprises a main valve 101 having an input chamber 103 into which a pressure fluid is introduced from an input port, an output port 104, a valve seat 105 in a flow path connecting the input and output ports with each other and a valve member 106 opening/closing the valve seat 105, and a pilot valve 102. The main valve 101 opens and closes the valve seat 105 by vertically moving the valve member 106 via a valve rod 107. A pressure receiving element (a diaphragm in this example) 108 is fixedly attached to the valve rod 107 and biased in a valve closing direction by a return spring 109. The pressure receiving element 108 is vertically moved by supplying and discharging a pressure fluid to and from the pressure action chamber 110 by the pilot valve 102.

In this well-known pilot type two-port valve 100, a stepped portion having a male screw portion is provided on the end portion of the valve rod 107. After inserting the pressure receiving element 108 onto the stepped portion, a nut 124 is screwed onto the male screw portion 123, thereby fixing the pressure receiving element 108 to the valve rod 107. A member 126 having a hole 127 is fitted into an upper opening 125 in the body 111 of the main valve 101, a seal 128 is provided in the hole 127 and the valve rod 107 fixedly attached to the pressure receiving element 108 moves through and is guided by the hole 127.

Further, the pressure fluid is supplied to the pressure action chamber 110 through a supply channel 112 provided in the body 111 of the main valve 101.

This pilot type two-port valve 100, however, has disadvantages as set out at (1) to (3) below because the valve rod 107 is fixedly attached to the pressure receiving element 108 and is guided by the hole 127 provided in the pivotal member 126 fitted into the upper opening 125 of the body 111 and the pressure fluid is supplied to the pressure chamber 110 through the supply channel 112 provided in the body 111 of the main valve 101.
(1) The pressure fluid flowing in the channel produces a biasing force acting on the valve member. The valve rod does not have sufficient resistance to the biasing force since it is guided by the hole provided in the pivotal member in a cantilevered state.
   Due to this, the valve rod does not move smoothly, the seal and piston packing tend to be frequently worn, sealing performance deteriorates and the life of the pilot type two-port valve is shortened.
(2) Normally, the pressure receiving element is attached to the valve rod by screwing a nut into a screw. However, measures need to be taken to prevent the nut from loosening, which disadvantageously deteriorates the assembly and disassembly performance of the components of the main valve.
(3) The structure for supplying a pilot pressure fluid to the pressure action chamber is complicated.

It is amongst the objects of the present invention to provide a pilot type two-port valve which allows a shaft to which a valve member is attached to move smoothly, which produces less seal and piston packing wear, which has excellent sealing performance, which can be easily assembled and disassembled and which has a simple structure for supplying and discharging a pressure fluid to and from a pressure chamber.

A pilot type two-port valve according to a preferred embodiment of the present invention comprises a main valve having an input port, an output port, a valve seat in a channel connecting the input port to the output port, a valve member for opening and closing the valve seat, a shaft provided to be vertically movable in an axial direction and having a tip end to which the valve member is attached, a piston coupled to the shaft, and a pressure action chamber on one side of the piston, and a pilot valve for supplying a pilot fluid to the pressure action chamber. The shaft and the piston are coupled to each other at an intermediate position of the shaft by a male screw formed on an outer periphery on a central portion of the shaft and a female screw formed on an inner periphery of a central hole of the piston, a seal is provided between the shaft and the piston, and a stopper ring is attached to the outer periphery of the shaft so as to prevent the piston from loosening by stopping the stopper ring on an outer end portion of the piston; and the shaft has a tip end portion and a proximal end portion extending to both sides of the piston, respectively, and slidably supported by respective bearings.

In a specific embodiment, the main valve has a valve body having the input port, the output port and the valve seat, a cover attached to the valve body, and a spacer separating in airtight fashion an interior of the cover from an interior of the valve body; the cover has a chamber therein which is partitioned by the spacer, the piston is contained in the chamber, the tip end portion of the shaft penetrates the spacer and extends into the valve body, the proximal end portion of the shaft is fitted into a cylindrical guide portion formed at the valve body, and the bearings are provided at the guide portion and the spacer, respectively.

Preferably, the valve body has a pilot chamber for receiving a pilot fluid supplied from the pilot valve, and a through hole for communicating the pilot chamber with the pressure action chamber is provided inside of the proximal end portion of the shaft.

Also, preferably, the pressure action chamber is formed between one end face of the piston and the spacer, a spring chamber is formed between the other end face of the piston and the cover, and a return spring for biasing the piston toward a valve closing direction is contained in the spring chamber.

In a pilot type two-port valve constituted as set out above, the shaft to which the valve member is attached is guided by the bearings at two portions, i.e., the tip end portion and the proximal end portion which are distanced from each other. Due to this, even if a biased force is exerted on the valve member by the pressure fluid flowing in the channel, it is possible to generate a force resisting the biased force on the shaft.

Further, the respective components contained in the cover can be easily assembled together by sequentially inserting and attaching the components from the opening side of the chamber in the cover. This facilitates the assembly and disassembly of these components contained in the cover, thereby making it possible to accurately assemble the two-port valve.

Additionally, the coupling of the shaft to the piston is made by providing the seal between the shaft and the piston, screwing the female screw provided at the piston into the male screw provided at the shaft and providing the stopper ring at the shaft to thereby prevent the piston from falling off. It is, therefore, possible to ensure locking the piston to the shaft and it is not necessary to provide special loosening preventive means as in the conventional case in which a nut is used. Furthermore, the shaft and the piston can be easily disassembled.

Moreover, the piston is driven by supplying the pilot fluid to the pressure action chamber using the pilot valve. Since the pilot fluid to the pressure action chamber is supplied by way of the through hole in the shaft, a channel for the supply of the pilot fluid is linear and simplified. Thus, the pilot pressure fluid flows smoothly and response characteristics are thereby enhanced.

The invention will now be further described by way of example with reference to the accompanying drawings in which:
FIG. 1 is a longitudinal sectional view of the salient parts of an embodiment of a valve of the present invention;
FIG. 2 is an enlarged cross-sectional view showing the coupling of a shaft and a piston of the valve of FIG. 1; and
FIG. 3 is a longitudinal sectional view of the salient parts of a well-known pilot type two-port valve.

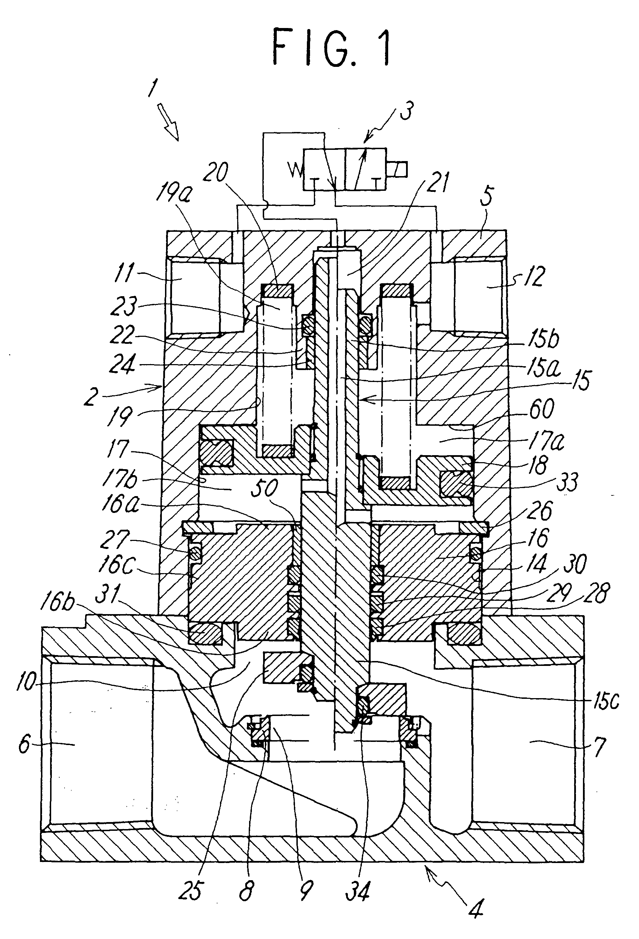

FIG. 1 is a longitudinal sectional view of an embodiment of a pilot type two-port valve according to the present invention. The valve is shown on the left of the centre line is in an opening state and on the right in a closed state.

This pilot type two-port valve 1 is comprised of a main valve 2 and a pilot valve 3. The main valve 2 comprises of a valve body 4, a cover 5 airtightly attached to the upper surface of the valve body 4, a spacer 16 airtightly partitioning the interior of the valve body 4 from that of the cover 5, a piston 18 sliding inside of the cover 5, a shaft 15 coupled to the piston 18 and a valve member 25 attached to the tip end of the shaft 15.

The valve body 4 comprises of an input port 6 into which a pressure fluid flows, an output port 7 out of which the pressure fluid flows, an annular valve seat 8 provided in a channel connecting the input and output ports, an attachment portion 9 to which the valve seat 8 is attached, and a valve chamber 10 formed at a position opposite to the valve seat 8 and leading to the output port 7. The valve member 25 is provided in the valve chamber 10.

The cover 5 has a chamber, hereinafter referred to as a space portion 17, partitioned by the spacer 16, and is provided with a pilot port 11 and a breather port 12 near the upper end portion of the cover 5. The piston 18 is slidably provided in the space portion 17. The piston 18 partitions the interior of the space portion 17 into a spring chamber 17a above the piston 18 and a pressure action chamber 17b below the piston 18.

The spring chamber 17a has a small diameter portion 19 having a diameter smaller than that of the space portion 17. A return spring 20 is contained in the small diameter portion 19 so as to be located between the piston 18 and the cover 5. This return spring 20 biases the piston 18 toward a valve closing direction. Also, a step portion 60 is provided between the small diameter portion 19 and the space portion 17. This step portion 60 restricts the elevating position of the piston 18. A hollow cylindrical guide portion 22 extending from the cover 5 is provided at the upper position and at the centre of the small diameter portion 19. An extending portion 15b on the proximal end of the shaft 15 is slidably fitted into the guide portion 22 and airtight, slidably supported by a sealant 23 and a bearing 24 provided at the guide portion 22. The interior of the guide portion 22 becomes a pilot chamber 21 and a pilot fluid is supplied from the pilot valve 3 into the pilot chamber 21.

The spacer 16 is in the form of a cylinder having a penetrating hole at the centre thereof. The spacer 16 has small diameter portions 16a and 16b near upper and lower end portions, respectively as well as a large diameter portion 16c between the small diameter portions 16a and 16b. The lower small diameter portion 16b is inserted into the valve chamber 10 of the valve body. The lower end face of the large diameter portion 16c is supported by a body wall around the valve chamber 10 and sealed by a sealant 31 attached to an annular groove on the body wall which groove is provided to surround the valve chamber 10. The upper end face of the large diameter portion 16c is positioned by a stopper ring 26 attached to an annular groove in the upper portion of an opening portion 14. Further, an annular groove is provided to attach a seal 27 thereto on the outer peripheral surface of the upper portion of the large diameter portion 16c. Also, a bearing 50 for guiding the tip end portion 15c of the shaft 15 is attached to the neighbourhood of the upper end of the peripheral wall of a penetrating hole through which the tip end portion 15c penetrates. Annular grooves are provided between the lower end of the peripheral wall of the penetrating hole and the bearing 50 to attach seals 28, 29 and 30 to the respective grooves.

The seal 27 is provided to shut off the pressure action chamber 17b from external air. The seal 28 is provided as a scraper to scrape away dust or the like adhering to the shaft. The seal 29 is provided to prevent a fluid from entering from the valve body side. The seal 30 is provided to seal the pressure of the pressure action chamber 17b.

The proximal end portion 15b extending upward of the piston 18, of the shaft 15 has a smaller diameter than that of the tip end portion 15c extending downward of the piston 18. A through hole 15a to communicate the pilot chamber 21 with the pressure action chamber 17b is provided in the proximal end portion 15b. The valve member 25 is airtightly attached to a small diameter portion on the tip end of the tip end portion 15c penetrating into the spacer 16 and extending into the valve chamber 10 of the valve body 4, by a sealant 34.

A piston packing 33 is provided around the piston 18 and the spring chamber 17a above the piston 18 communicates with the breather port 12.

As shown in FIG. 1, the pilot valve 3 provided above the cover 5 is switched to thereby communicate the pilot chamber 21 with the pilot port 11 or the breather port 12.

If the pilot valve 3 is switched to thereby communicate the pilot chamber 21 with the pilot port 11, a pilot fluid is supplied to the pressure action chamber 17b by way of the through hole 15a. The piston 18 is, therefore, pushed up by fluid pressure against the spring force of the return spring 20. As a result, the valve member 25 is moved upward by the shaft 15, whereby the valve seat 8 opens and the pressure fluid of the input port 6 flows in the output port 7.

On the other hand, if the pilot valve 3 is switched to a position shown in FIG. 1 to thereby communicate the pilot chamber 21 with the breather port 12, a pilot fluid within the pressure action chamber 17b flows out of the breather port 12 by way of the through hole 15a and the pilot chamber 21. The piston 18 and the shaft 15 are, therefore, pushed down by the spring force of the return spring 20, the valve member 25 closes the valve seat 8 and the pressure fluid of the input port 6 does not flow in the output port 7.

In this embodiment, the pilot chamber 21 is communicated with the pilot port 11 or the breather port 12 by providing the pilot valve 3 above the cover 5. It will be appreciated that the pilot type two-port valve is not necessarily limited to this structure.

For example, it is possible to introduce pilot fluid pressure into the pilot port 11 through a three-port valve which is not shown in FIG. 1. In that case, it suffices to communicate the pilot port 11 with the pilot chamber 21 and the pilot valve 3 shown therein can be dispensed with. Also, in that case, the pressure fluid of the pilot chamber 21 is supplied and discharged by switching the three-port valve. It is, therefore, unnecessary to communicate the pilot chamber 21 with the breather port 12.

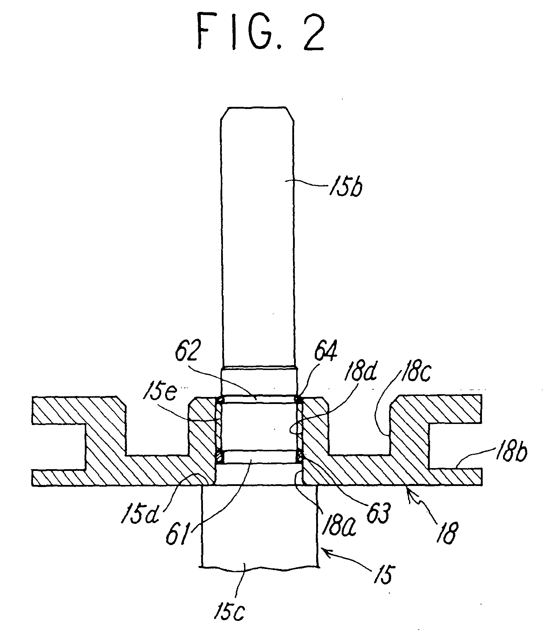

FIG. 2 shows an embodiment of a structure by which the shaft 15 and the piston 18 are coupled with each other.

The shaft 15 has an annular step portion 15d for stopping the piston 18 between the tip end portion 15c having a large diameter and the proximal end portion 15b having a small diameter. A male screw 15e is provided at a position at which the proximal end portion 15b is adjacent the step portion 15d. A sealing groove 61 is formed on the end portion of the male screw 15e on the step portion 15d side, and a groove 62 for containing a stopper ring is formed on the end portion of the male screw 15e opposite to the step portion 15d side.

On the other hand, the piston 18 is in the form of a disk having a penetrating hole 18a at the centre thereof. An annular concave groove 18b for containing the piston packing 33 is provided on the outer peripheral surface of the piston 18. An annular concave portion 18c which becomes the seat of the return spring 20 is formed on the upper surface of the piston 18 at a position facing the space portion 19a. A female screw 18d is provided on the inner peripheral surface of the penetrating hole 18a.

A seal 63 and a stopper ring 64 are attached to the grooves 61 and 62 of the shaft 15 to which the piston 18 is attached by the screws.

The shaft 15 and the piston 18 are assembled together as follows.

The seal 63 is attached to the sealing groove 61 of the shaft 15, the piston 18 is then inserted into the groove 61 from the extending portion 15b of the shaft 15, and the female screw 18d of the piston 18 is engaged with the male spring 15e of the shaft 15 while slidably contacting the piston 18 with the seal 63.

The stopper ring 64 is attached to the groove 62 while the lower end surface of the piston 18 is pushed against the step portion 15d of the shaft 15.

By doing so, the piston 18 is locked to the shaft 15. Therefore, there is no need to specially provide means for preventing the piston 18 from loosening on the screw portions. Besides, the piston and the shaft can be disassembled.

In the above-stated embodiments, the shaft 15 to which the valve member 25 is attached is guided by the first bearing 50 provided in the spacer 16 within the cover 5 and the second bearing 24 provided at the guide portion 22. The operation of the shaft 15 is, therefore, guided by the upper and lower bearings 50 and 24 which are distanced from each other in shaft direction. Due to this, even if a biased force is exerted on the valve member 25 by the pressure fluid flowing in the channel, it is possible to generate a force resisting the biased force in the shaft 15.

Further, the respective components within the cover 5 can be easily assembled together only by sequentially inserting and attaching the components from the opening space side of the cover 5. This facilitates the assembly and disassembly of these components, thereby making it possible to accurately assemble a two-port valve.

Additionally, the groove 62 is formed on the end of the male screw 15e of the shaft 15 to which the piston 18 is attached by the screws and the stopper ring 64 is attached to the groove 62. Therefore, the piston 18 is locked to the shaft 15, no special means for preventing the piston 18 from loosening is necessary and the piston and the shaft can be disassembled.

Moreover, the pilot valve 3 is switched to supply and discharge the pressure fluid of the pressure action chamber 17b, thereby vertically moving the piston 18 to open and close the valve seat 8. Since the supply and discharge of the pressure fluid of the pressure action chamber 17b are conducted through the pilot chamber 21 communicated with the pilot valve 3 and the through hole 15a within the shaft 15, the extending portion 15b of the shaft 15 can be also used as a passage to supply and discharge a pressure fluid and a portion containing and guiding the extending portion 15b of the shaft 15 can be also used as a pilot chamber. This simplifies the structure for supplying and discharging the pressure fluid to and from the pressure action chamber 17. Besides, since the passage is linear, the connection of the passage can be made surely, economically connected and pilot pressure fluid flows smoothly, thereby improving response characteristics.

As described in detail above, the present invention provides a pilot type two-port valve which allows the shaft to which the valve member is connected to move smoothly, which produces less seal and piston packing wear, which has excellent sealing performance and excellent assembly and disassembly performance, and which can easily supply and discharge the pressure fluid to and from the pressure action chamber.

## Claims

1. A pilot type two-port valve comprising a main valve having an input port, an output port, a valve seat in a channel connecting the input port to the output port, a valve member for opening and closing the valve seat, an axially movable shaft to which the valve member is attached, a piston coupled to the shaft, and a pressure action chamber on one side of the piston, and a pilot valve for supplying a pilot fluid to the pressure action chamber, wherein the shaft and the piston are coupled to each other at an intermediate portion of the shaft by a screw connection, a seal being provided between the shaft and the piston, and a stopper ring being attached to the outer periphery of the shaft such as to prevent the piston from loosening from the shaft and wherein the shaft has a tip end portion and a proximal end portion on opposite sides of the piston, which are slidably supported by respective bearings.

2. A pilot type two-port valve as claimed in Claim 1 wherein the screw connection comprises a male screw formed on an outer periphery of a central portion of the shaft and a female screw formed on an inner periphery of a central hole of the piston.

3. A pilot type two-port valve as claimed in either Claim 1 or Claim 2 wherein the main valve has a valve body having the input port, the output port and the valve seat, a cover attached to the valve body, and a spacer separating an interior of the cover from an interior of the valve body, and wherein the cover has a chamber provided inside and partitioned by the spacer, the piston is contained in the chamber, the tip end portion of the shaft penetrates the spacer and extends into the valve body, the proximal end portion of the shaft is fitted into a cylindrical guide portion formed in the valve body, and the bearings are provided at the guide portion and the spacer, respectively.

4. A pilot type two-port valve as claimed in Claim 3, wherein the valve body has a pilot chamber for receiving a pilot fluid supplied from the pilot valve, and a through hole for connecting the pilot chamber with the pressure action chamber is provided inside the proximal end portion of the shaft.

5. A pilot type two-port valve as claimed in either Claim 3 or Claim 4, wherein the pressure action chamber is formed between one end face of the piston and the spacer, a spring chamber is formed between the other end face of the piston and the cover, and a return spring for elastically biasing the piston in a valve closing direction is contained in the spring chamber.
